# EUROPÄISCHE PATENTANMELDUNG

(11) **EP 2 434 194 A2**
(43) Veröffentlichungstag der Anmeldung: **28.03.2012**
(21) Anmeldenummer: 11007030.7
(22) Anmeldetag: 30.08.2011
(51) Int. Cl.: F16L 27/113

(54) **Verbindungsanordnung zum Verbinden von hydraulischen Bauteilen**

(30) Priorität: 24.09.2010 DE 102010046383
(71) Anmelder: ABB Technology AG, 8050 Zurich (CH)
(72) Erfinder: Schmidt, Matthias, 60596 Frankfurt (DE)
(74) Vertreter: Partner, Lothar

(57) **Zusammenfassung**

Die Erfindung betrifft eine Verbindungshülse (1) zum Verbinden von Leitungskanälen (13, 14), mit einem hohlzylindrischen Hülsenkörper (2), wobei mindestens an einem Ende des Hülsenkörpers (2) ein Verbindungsbereich (5) als eine Verdickung mit einem kreisförmigen Querschnitt vorgesehen ist, wobei an einer axialen Position der größten Querschnittsfläche in dem Verbindungsbereich (5) eine umlaufende Dichtung (6) vorgesehen ist.

## Beschreibung

Die Erfindung betrifft im Allgemeinen das Gebiet der Hydraulik, insbesondere das Verbinden von Bauelementen mit hydraulischen Leitungskanälen und insbesondere Verbindungstechniken zum druckdichten Verbinden der Leitungskanäle der Bauelemente, wie sie beispielsweise in hydromechanischen Leistungsschalterantrieben in gasisolierten Hochspannungsschaltanlagen Verwendung finden.

Im Allgemeinen werden hydraulische Bauelemente, die Leitungskanäle zum Führen hydraulischer Fluide aufweisen, mit Hilfe einer oder mehrerer Dichtungen miteinander verbunden. Die Dichtungen dienen dazu, ein Austreten eines in den Leitungskanälen befindlichen Fluids auch bei Wirken hoher Drücke zu verhindern.

Eine gängige Vorgehensweise zum Verbinden der Bauelemente besteht darin, radial dichtende O-Ringe in einer eine Leitungsöffnung umgebende Nut an mindestens einem der Bauteile vorzusehen. Beim Aufsetzen der Bauelemente aufeinander werden die Öffnungen der Leitungskanäle zueinander in Deckung gebracht. Der in der Nut eingesetzte O-Ring liegt dann an einem Oberflächenbereich des entsprechend anderen Bauelements an und dichtet somit die hydraulische Verbindung nach außen ab. Ein solches Verbindungsverfahren hat den Vorteil, dass es bei der Herstellung der Leitungsverbindung nicht auf eine exakte Ausrichtung der Leitungskanäle ankommt, da die Leitungsöffnungen der miteinander zu verbindenden Leitungskanäle nicht genau fluchten müssen, um eine hydraulische Verbindung herzustellen. Jedoch sind die in der Nut angebrachten O-Ringe in der Regel anfällig für Belastungen, insbesondere für Scherbelastungen zwischen den Bauelementen.

Eine weitere Möglichkeit, derartige Bauelemente miteinander zu verbinden, besteht in dem Vorsehen von Verbindungshülsen, die in der Regel an beiden Enden mit axial dichtenden O-Ringen versehen sind. Diese werden in Verbindungsabschnitte in den Bauelementen eingesetzt. Die Verbindungsabschnitte stellen in der Regel Endbereiche der Leitungskanäle dar, die einen vergrößerten Durchmesser zur Aufnahme der Verbindungshülse aufweisen. Nach dem Einschieben der Verbindungshülsen in die Verbindungsabschnitte dichten die O-Ringe die Verbindung zwischen der Verbindungshülse und dem betreffenden Bauelement ab. Nach dem Einsetzen der Verbindungshülse in den Verbindungsabschnitt in einem ersten Bauelement steht ein weiteres Ende der Verbindungshülse aus dem ersten Bauelement hervor, auf das ein mit dem ersten Bauelement zu verbindendes zweites Bauelement aufgesetzt werden kann. Auf diese Weise kann zwischen Leitungskanälen in zwei Bauelementen eine dichte druckbelastbare Verbindung hergestellt werden. Diese Technik findet beispielsweise bei hydraulischen Leistungsschalterantrieben in Hochspannungsschaltanlagen Verwendung. Derartige Verbindungshülsen sind sehr robust und dichten die Leitungskanäle auch bei großen Druckstößen gegen die Umgebung ab. Nachteilig bei der Verwendung derartiger Verbindungshülsen ist jedoch, dass diese die Leitungskanäle der Bauelemente nur dann verbinden können, wenn diese genau fluchtend zueinander sind, da sich ansonsten die Verbindungshülse nicht in die Verbindungsabschnitte einsetzen lässt. Dies hat insbesondere bei der Fertigung von Vorrichtungen mit mehreren miteinander zu verbindenden Bauelementen mit hydraulischen Leitungskanälen den Nachteil, dass die Fertigungstoleranzen nur sehr gering sein dürfen und insbesondere eine exakte Justierung während des Verbindens der Bauelemente notwendig ist.

Es ist daher Aufgabe der vorliegenden Erfindung, eine verbesserte Verbindungsmöglichkeit bereitzustellen, mit der hydraulische Verbindungskanäle in Bauelementen dicht und druckbelastbar miteinander verbunden werden können und dabei geringere Anforderungen an die Fertigungstoleranzen gefordert werden können.

Diese Aufgabe wird durch die Verbindungshülse gemäß Anspruch 1 sowie durch die Verbindungsanordnung gemäß dem nebengeordneten Anspruch gelöst.

Weitere vorteilhafte Ausgestaltungen sind in den abhängigen Ansprüchen angegeben.

Gemäß einem ersten Aspekt ist eine Verbindungshülse zum Verbinden von Leitungskanälen vorgesehen. Die Verbindungshülse umfasst einen hohlzylindrischen Hülsenkörper, wobei mindestens an einem Ende des Hülsenkörpers ein Verbindungsbereich als eine Verdickung mit einem kreisförmigen Querschnitt vorgesehen ist, wobei an einer axialen Position der größten Querschnittsfläche in dem Verbindungsbereich eine umlaufende Dichtung vorgesehen ist.

Eine Idee der obigen Verbindungshülse besteht darin, dass die Verbindungshülse an mindestens einem Ende mit einem Verbindungsbereich größeren Durchmessers versehen ist, dessen Außenfläche beispielsweise kugelsegmentförmig ausgebildet sein kann. Im Abschnitt des größten Durchmessers ist eine umlaufende Dichtung vorgesehen, die vorzugsweise eine Elastizität gegen einen Druck in radialer Richtung aufweist. Auf diese Weise ist es möglich, dass die Verbindungshülse auch schräg in einen entsprechenden Verbindungsabschnitt eines Leitungskanals in einem Bauelement, eingesetzt werden kann, ohne dass die Stabilität und Zuverlässigkeit der Dichtung beeinträchtigt ist.

Weiterhin können Verbindungsbereiche an beiden Enden des Hülsenkörpers vorgesehen sein.

Die Dichtung kann in einer umlaufenden Nut in dem Hülsenkörper angeordnet sein.

Gemäß einer weiteren Ausführungsform kann die Dichtung in radialer Richtung über den Hülsenkörper hervorstehen und elastisch ausgebildet sein. Durch entsprechendes Vorsehen einer Dichtung mit hinreichender Elastizität in radialer Richtung können bei einem schrägen Einsetzen der Verbindungshülse in dem Verbindungsabschnitt auftretende Passungenauigkeiten problemlos ausgeglichen werden. Auf diese Weise ist es möglich, eine Verbindung zwischen hydraulischen Leitungskanälen von zwei Bauelementen herzustellen, bei denen die Verbindungsöffnungen der Leitungskanäle leicht von der zueinander fluchtenden Ausrichtung abweichen können, ohne dass die Dichtwirkung der Verbindungshülse beeinträchtigt ist.

Die Verbindungshülse kann in dem Verbindungsbereich kugelförmig oder kugelsegmentförmig ausgebildet sein. Durch die kugelsegmentartige Ausbildung der Außenfläche an dem Endabschnitt der Verbindungshülse wird trotz einer schrägen Einpassung der Verbindungshülse in dem Verbindungsabschnitt der effektive Durchmesser der Verbindungshülse an der Stelle, an der die Außenfläche der Verbindungshülse der Innenwand des Verbindungsabschnitts gegenüberliegt, nahezu beibehalten.

Gemäß einem weiteren Aspekt ist eine Verbindungsanordnung mit zwei Bauelementen vorgesehen, die jeweils einen Leitungskanal aufweisen. Die Leitungskanäle können über die obige Verbindungshülse miteinander verbunden sein.

Es kann vorgesehen sein, dass die Leitungskanäle der Bauelemente nicht fluchtend aufeinander angeordnet sind, wobei die Verbindungshülse so in Verbindungsabschnitten der Leitungskanäle angeordnet sind, dass die axiale Richtung des Hülsenkörpers schräg zu einer axialen Richtung der Verbindungsabschnitte angeordnet ist.

Insbesondere kann für mindestens einen der Verbindungsbereiche die durch die Dichtung umschlossene Fläche schräg zu einer Ebene senkrecht zur axialen Richtung des Verbindungsabschnittes angeordnet sein, wobei die Dichtung über den gesamten Umfang an der Innenwand des Verbindungsabschnittes anliegt, um eine Dichtwirkung zu erreichen.

Bevorzugte Ausführungsformen werden nachfolgend anhand der beigefügten Zeichnungen näher erläutert. Es zeigen:
- Figur 1: eine Querschnittsdarstellung einer Verbindungshülse gemäß einer Ausführungsform der Erfindung; und
- Figuren 2a, 2b: eine Verbindungsanordnung zur Verbindung von hydraulischen Leitungskanälen von zwei Bauelementen mit Hilfe der Verbindungshülse der Figur 1 bei fluchtenden und nicht-fluchtenden Leitungskanälen.

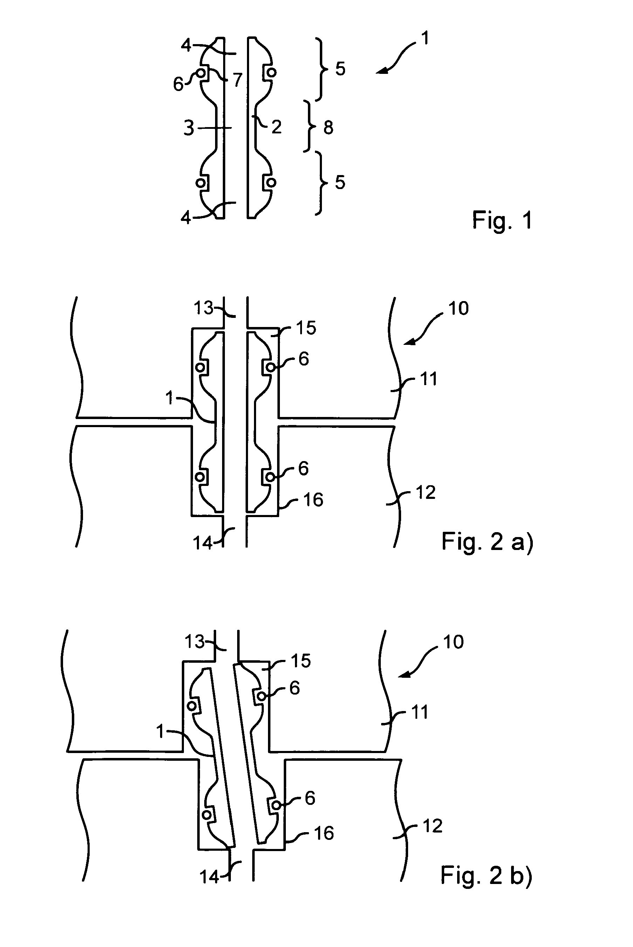

In Figur 1 ist eine Querschnittsdarstellung der Verbindungshülse 1 gemäß einer Ausführungsform der Erfindung dargestellt. Die Verbindungshülse 1 weist einen zylindrischen Hülsenkörper 2 auf, der einen Hohlraum 3 umgibt. Der Hülsenkörper 2 ist an seinen Stirnseiten 4 geöffnet, um einen Verbindungskanal zum Leiten eines hydraulischen Fluids zu bilden. Der Querschnitt des Hohlraums 3 ist im Wesentlichen beliebig, jedoch werden im Allgemeinen Verbindungshülsen mit kreisförmigem Querschnitt verwendet, um eine Einsetzbarkeit in allen Verdrehrichtungen zu ermöglichen.

An mindestens einem der Enden der Verbindungshülse 1 ist ein Dichtungsbereich 5 vorgesehen. In dem Dichtungsbereich 5 ist der Durchmesser des Hülsenkörpers 2 verdickt, so dass der Durchmesser des Hülsenkörpers 2 (quer zur axialen Richtung) im Dichtungsbereich 5 größer ist als der Durchmesser des Hülsenkörpers 2 an einem von dem betreffenden Endabschnitt entfernten Mittenbereich 8 des Hülsenkörpers 2. Je nach Anforderung kann die Verbindungshülse 1 an einem oder an beiden Enden des Hülsenkörpers 2 mit entsprechenden Verbindungsbereichen 5 versehen sein. In dem Verbindungsbereich 5 kann die Außenfläche des Hülsenkörpers 2 kugelförmig bzw. kugelsegmentförmig ausgebildet sein, so dass der Durchmesser der Verbindungshülse 1 im Dichtungsbereich 5 auch bei einer Verkippung aus der axialen Richtung des Hülsenkörpers 2 nahezu unverändert bleibt.

Im Bereich des größten Durchmessers in dem Verbindungsbereich 5 ist eine Dichtung 6 vorgesehen, die um die Verbindungshülse 2 umlaufend als Dichtungsring ausgebildet ist. Die Dichtung 6 kann beispielsweise als O-Ring vorgesehen sein und dazu einen runden (O-förmigen) Querschnitt aufweisen. Auch andere Querschnitte der Dichtung 6 sind denkbar.

Der Dichtungsring 6 ist vorzugsweise in einer umlaufenden Nut 7 in dem Verbindungsbereich 5 angeordnet, so dass der Dichtungsring 6 gegen ein Verschieben entlang des Hülsenkörpers 2 gesichert ist. Der Dichtungsring 6 ist vorzugsweise druckelastisch ausgebildet, um Abweichungen von Durchmessern einer Außenumfangslinie einer zur Querschnittsebene des Hülsenkörpers verkippten Ebene auszugleichen. Dies ist notwendig, um eine ausreichende Dichtwirkung in dem Dichtungsbereich, an dem der Dichtring 6 an der Innenwand eines Verbindungsabschnittes in einem Bauelementes anliegt, auszugleichen.

In den Figuren 2a und 2b ist eine Verbindungsanordnung mit einer Verbindungshülse 1 zur Verbindung von zwei Bauelementen mit jeweils einem hydraulischen Leitungskanal vorgesehen. Figur 2a zeigt die Verbindungsanordnung, bei der die Öffnungen der Leitungskanäle in den Bauelementen fluchtend aneinander angeordnet sind, während Figur 2b den Fall zeigt, bei dem die Leitungsöffnungen der Leitungskanäle zueinander versetzt angeordnet sind.

Im Detail zeigt Figur 2a eine Querschnittsdarstellung einer Verbindungsanordnung 10 mit einem ersten Bauelement 11 und einem zweiten Bauelement 12, die jeweils einen ersten bzw. zweiten Leitungskanal 13, 14 aufweisen. Die Leitungskanäle 13, 14 weisen an dem einer Öffnung zugewandten Ende einen ersten bzw. einen zweiten zylindrischen Verbindungsabschnitt 15, 16 auf, in dem der entsprechende Verbindungskanal 13, 14 einen vergrößerten Durchmesser aufweisen kann. Die Verbindungsabschnitte 15, 16 weisen einen zylindrischen Hohlraum auf, dessen Achsrichtungen zueinander koaxial angeordnet sind. Im vorliegenden Fall münden die Verbindungsabschnitte 15, 16 senkrecht an einer Außenfläche des jeweiligen Bauelements 11, 12.

In den Verbindungsabschnitten 15, 16 ist die Verbindungshülse 1 angeordnet, so dass in dem Verbindungsabschnitt 15 des ersten Bauelements 11 ein erstes Ende der Verbindungshülse 1 mit dem entsprechenden Verbindungsbereich 5 und in dem Verbindungsabschnitt 16 des zweiten Bauelements 12 ein zweites Ende der Verbindungshülse 1 mit dem entsprechenden Verbindungsbereich 5 angeordnet sind. Im in Fig. 2a gezeigten Fall ist die Verbindungshülse 1 koaxial bzw. achsparallel zu den Verbindungsabschnitten 15, 16 angeordnet.

Die Verbindungsbereiche 5 liegen mit ihren Scheitelpunkten der kugelsegmentförmigen Außenfläche des Hülsenkörpers 2 an der Innenwand des jeweiligen Verbindungsabschnittes 15, 16 an bzw. sind möglichst nahe zu der Innenwand angeordnet, so dass die dort angebrachten Dichtringe 6 den noch verbleibenden Zwischenraum zwischen der Außenfläche des Hülsenkörpers 2 und der Innenwand des Verbindungsabschnittes 15, 16 abdichten. Der Durchmesser des Hülsenkörpers 2 im Verbindungsbereich 5 und insbesondere die Dicke des Dichtrings 6 sind so dimensioniert, dass bei Einsetzen in den Verbindungsabschnitt 15, 16 des jeweiligen Bauelementes eine ausreichende Dichtwirkung der Verbindung zwischen dem Leitungskanal 13 bzw. 14 und der Verbindungshülse 1 gegenüber der Umgebung erreicht wird.

In Figur 2b ist der Fall gezeigt, bei dem die Leitungskanäle 13, 14 der beiden Bauelemente 11, 12 zueinander nicht fluchtend, das heißt koaxial versetzt zueinander angeordnet sind. Somit fluchten auch nicht die Verbindungsabschnitte 15, 16, so dass ein Einsetzen einer rein zylinderförmig ausgebildeten Verbindungshülse nicht möglich wäre. Die obige Verbindungshülse 1 mit ihrem gegenüber den Verbindungsbereichen 15, 16 dünneren Mittenabschnitt ist jedoch in der Lage, eine zuverlässige hydraulische Verbindung zwischen den nicht fluchtenden Verbindungsabschnitten 15, 16 herzustellen.

Zum Verbinden der beiden Bauelemente 11, 12 wird vorgesehen, die Verbindungshülse 1 schräg zu den einander nicht koaxialen Achsrichtungen der Öffnungen der Leitungskanäle 13, 14 anzuordnen. Die schräge Anordnung der Verbindungshülse 1 führt dazu, dass eine Umfangslinie des Verbindungsbereichs 5, die die Punkte markiert, die der Innenwand des jeweiligen Verbindungsabschnittes 15, 16 am Nächsten liegen, nicht der Umfangslinie des größten Durchmessers innerhalb des Verbindungsbereiches 5 der Verbindungshülse 1 bezüglich einer Richtung senkrecht zur axialen Richtung entspricht. Da jedoch in dem Verbindungsbereich 5 der Durchmesser des Hülsenkörpers 2 gegenüber dem Mittenbereich 8 vergrößert ist, ist es möglich, den Hülsenkörper 2 schräg in dem jeweiligen Verbindungsabschnitt 15, 16 anzuordnen. D.h. die axiale Richtung des Hülsenkörpers weicht von der axialen Richtung des betreffenden Verbindungsabschnittes 15, 16 ab. Dazu weist die Verbindungshülse 1 einen gegenüber dem Innendurchmesser der Verbindungsabschnitte 15, 16 reduzierten Außendurchmesser in dem Mittenbereich 8 zwischen den Verbindungsbereichen 5 auf.

Durch die schräge Anordnung der Verbindungshülse weist der Dichtungsbereich 5 nun abhängig von der Kipprichtung Bereiche auf, die einen vergrößerten Abstand zur Innenwand der Verbindungsabschnitte 15, 16 aufweisen. Dazu ist vorzugsweise vorgesehen, dass der Dichtring 6 mit einer Dicke (quer zur axialen Richtung) und Elastizität ausgebildet ist, um auch den durch die schräge Anordnung vergrößerten Abstand zwischen der Außenfläche des Dichtungsbereichs und der Innenwand der Verbindungsabschnitte 15, 16 ausgleichen zu können, ohne dass die Dichtwirkung beeinträchtigt wird.

Es müssen für die Verbindungsbereiche 5 nicht notwendigerweise kugelsegmentförmige Abschnitte vorgesehen sein. Es können jedoch auch die Kugelform durch mehrere konische Teilstücke, die aneinander angeordnet sind, angenähert werden.

Um eine zuverlässige Verbindung der Leitungskanäle 13, 14 zu gewährleisten, auch wenn diese leicht zueinander versetzt sind, ist es zum einen notwendig, dass der Verbindungsbereich so ausgebildet ist, dass der Dichtring auch bei einer leichten Verkippung, wie sie bei einem nicht-fluchtenden Aufeinanderaufsetzen von Verbindungsabschnitten der Bauelemente auftreten kann, über die gesamte Umfangslinie an der Innenwand des Verbindungsbereichs anliegt. Zum anderen ist es notwendig, dass die Verbindungshülse 1 zwischen den Dichtungsbereichen 5, an denen der Dichtring 6 aufliegt, einen verringerten Querschnitt aufweist, damit der Hülsenkörper 2 durch den verringerten Querschnitt des Übergangs zwischen den Verbindungsabschnitten 15, 16 nicht durch eine Kante einer der Öffnungen behindert wird.

### BEZUGSZEICHENLISTE

- 1: Verbindungshülse
- 2: Hülsenkörper
- 3: Hohlraum
- 4: Öffnung
- 5: Verbindungsbereich
- 6: Dichtungsring
- 7: Nut
- 10: Verbindungsanordnung
- 11: erstes Bauelement
- 12: zweites Bauelement
- 13: erster Leitungskanal
- 14: zweiter Leitungskanal
- 15: erster Verbindungsabschnitt
- 16: zweiter Verbindungsabschnitt

## Patentansprüche

1. Verbindungshülse (1) zum Verbinden von Leitungskanälen (13, 14), mit einem hohlzylindrischen Hülsenkörper (2), wobei mindestens an einem Ende des Hülsenkörpers (2) ein Verbindungsbereich (5) als eine Verdickung mit einem kreisförmigen Querschnitt vorgesehen ist, wobei an einer axialen Position der größten Querschnittsfläche in dem Verbindungsbereich (5) eine umlaufende Dichtung (6) vorgesehen ist.

2. Verbindungshülse (1) nach Anspruch 1, wobei Verbindungsbereiche (5) an beiden Enden des Hülsenkörpers (2) vorgesehen sind.

3. Verbindungshülse (1) nach Anspruch 1 oder 2, wobei die Dichtung (6) in einer umlaufenden Nut (7) in dem Hülsenkörper (2) angeordnet ist.

4. Verbindungshülse (1) nach einem der Ansprüche 1 bis 3, wobei die Dichtung (6) in radialer Richtung über den Hülsenkörper (2) hervorsteht und elastisch ausgebildet ist.

5. Verbindungshülse (1) nach einem der Ansprüche 1 bis 4, wobei der Verbindungsbereich (5) kugelförmig oder kugelsegmentförmig ausgebildet ist.

6. Verbindungsanordnung (10) mit zwei Bauelementen (11, 12), die jeweils einen Leitungskanal (13, 14) aufweisen, wobei die Leitungskanäle (13, 14) über eine Verbindungshülse (1) nach einem der Ansprüche 1 bis 5 miteinander verbunden sind.

7. Verbindungsanordnung (10) nach Anspruch 6, wobei die Leitungskanäle (13, 14) der Bauelemente (11, 12) nicht fluchtend aufeinander angeordnet sind, wobei die Verbindungshülse (1) so in Verbindungsabschnitten (15, 16) der Leitungskanäle (13, 14) angeordnet sind, dass die axiale Richtung des Hülsenkörpers (1) schräg zu einer axialen Richtung der Verbindungsabschnitte (15, 16) angeordnet ist.

8. Verbindungsanordnung (10) nach Anspruch 7, wobei für mindestens einen der Verbindungsbereiche (15, 16) die durch die Dichtung (6) umschlossene Fläche schräg zu einer Ebene senkrecht zur axialen Richtung des Verbindungsabschnittes (15, 16) angeordnet ist, wobei die Dichtung (6) über den gesamten Umfang an der Innenwand des Verbindungsabschnittes (15, 16) anliegt, um eine Dichtwirkung zu erreichen.
